# EUROPÄISCHE PATENTSCHRIFT

(11) **EP 3 554 867 B1**
(45) Veröffentlichungstag und Bekanntmachung des Hinweises auf die Patenterteilung: **09.06.2021**
(21) Anmeldenummer: 17798193.3
(22) Anmeldetag: 15.11.2017
(51) Int. Cl.: F16C 11/06, B60G 7/00

(54) **GELENK FÜR EIN FAHRZEUG UND VERFAHREN ZUM HERSTELLEN EINES SOLCHEN GELENKES**
JOINT FOR A VEHICLE AND METHOD FOR PRODUCING SUCH A JOINT
ARTICULATION POUR UN VÉHICULE ET PROCÉDÉ PERMETTANT DE FABRIQUER UNE TELLE ARTICULATION

(30) Priorität: 15.12.2016 DE 102016225127
(43) Veröffentlichungstag der Anmeldung: 23.10.2019
(73) Patentinhaber: ZF Friedrichshafen AG, 88046 Friedrichshafen (DE)
(72) Erfinder: BROEKER, Klaus, 49163 Bohmte (DE); HOENKE, Monnic, 31600 Uchte (DE)
(74) Vertreter: ZF Friedrichshafen AG
(86) Internationale Anmeldenummer: PCT/EP2017/079259
(87) Internationale Veröffentlichungsnummer: WO 2018/108418

(56) Entgegenhaltungen:
- WO-A1-2006/056171
- DE-A1-102012 207 527
- US-A- 4 714 368
- US-A- 5 230 580
- US-A1- 2006 098 908
- US-A1- 2010 054 851

## Beschreibung

Die Erfindung betrifft ein Gelenk für ein Fahrzeug mit einer Außenhülse, einer Gelenkschale zum Aufnehmen eines bewegbar gelagerten Gelenkinnenteils, einer Innenhülse, die mindestens teilweise zwischen der Gelenkschale und der Außenhülse angeordnet ist, wobei die Innenhülse zwei axial voneinander beabstandete am Außenumfang der Innenhülse umlaufende, radial nach außen vorstehende Randzylinder aufweist und die beiden Randzylinder eine umlaufende Vertiefung in Gestalt einer Nut am Außenumfang der Innenhülse bestimmen. Des Weiteren betrifft die Erfindung ein Verfahren zum Herstellen eines Gelenkes, bei dem in eine Außenhülse eine Innenhülse eingebracht wird, bei dem eine Gelenkschale in der Innenhülse angeordnet wird, bei dem in der Gelenkschale ein Gelenkinnenteil bewegbar gelagert wird, und bei dem in die Außenhülse ein Verschlussring zum mindestens teilweisen radialen Aufweiten der Außenhülse eingepresst wird.

Ein derartiges Gelenk bzw. ein derartiges Verfahren ist aus der DE 10 2012 207 527 A1, die ein Gelenk gemäß dem Oberbegriff des unabhängigen Anspruchs 1 und ein Verfahren zur Herstellung eines solchen Gelenks zeigt, bekannt. Hiernach ist das Gelenk als ein Hülsengelenk ausgebildet, das eine sich in einer axialen Richtung erstreckende Außenhülse und zwei in der Außenhülse angeordnete Verschlussringe aufweist. In der Außenhülse und in axialer Richtung zwischen den beiden Verschlussringen ist eine Innenhülse angeordnet, in welcher eine Kugelschale zum Aufnehmen einer in der Kugelschale bewegbar gelagerten Kugelhülse sitzt. Die Innenhülse weist zwei radial nach außen vorstehende Ränder in der Gestalt von Randzylinder auf, wodurch sich zwischen der Innenhülse und der Außenhülse ein umlaufender Freiraum in der Gestalt einer Vertiefung bzw. Nut ergibt. Aus der WO 2006/056171 A1 ist ein Kugelhülsengelenk mit einer Gelenkschale und einem Gelenkgehäuse in Art einer Außenhülse bekannt. Zwischen dem Gelenkgehäuse und der Gelenkschale sind zwei zueinander mittels eines Spaltes axial beabstandete Kraftausgleichelemente angeordnet.

Der US 2010/0054851 A1 ist ein Kugelgelenk mit einem Gelenkgehäuse und einer in dem Gelenkgehäuse angeordneten Gelenkschale zu entnehmen, wobei ein Verschlussring zum Festsetzen der Gelenkschale in das Gelenkgehäuse verrollt ist.

Gelenke, insbesondere Einpressgelenke, Hülsengelenke und/oder Zapfengelenke, können in verschiedenen Ausführungsformen mit einem Fahrzeugbauteil kombiniert und/oder in ein Fahrzeugbauteil eingepresst werden. Aufgrund des Einpressens des Gelenks bzw. der Außenhülse in ein Lagerauge kann jedoch ein Zielkonflikt entstehen. Zum einen muss die Einpresskraft einen Mindestwert erreichen, um einen hinreichenden Festsitz des Gelenks in dem Lagerauge zu gewährleisten. Insbesondere resultiert die Einpresskraft aus der Einpressüberdeckung von Außenhülsendurchmesser zum Lageraugendurchmesser und den Reibbeiwerten. Der feste Sitz wird üblicherweise durch festgelegte minimale Auspresskräfte oder dynamische Belastungen vorgegeben. Es besteht jedoch die Gefahr, dass aufgrund der Einpressüberdeckung der Außenhülsendurchmesser derart reduziert wird, dass das Bewegungswiderstandsmoment des Gelenks ansteigt. Eine Veränderung des Bewegungswiderstandsmomentes aufgrund des Einpressens des Gelenkes in ein Lagerauge ist häufig unerwünscht und kann die Fahrwerksabstimmung beeinträchtigen.

Gemäß dem bekannten Stand der Technik kann dieser Zielkonflikt mittels einer geeignet ausgebildeten Innenhülse gelöst werden. Hierbei kann mittels der Innenhülse die Gelenkschale mindestens in einem vorgegebenen Umfangsbereich vor den Einflüssen einer Durchmesserreduzierung der Außenhülse geschützt werden. Insbesondere sitzt die Gelenkschale unter Zwischenschaltung der Innenhülse in der Außenhülse. Mittels der Innenhülse ist realisierbar, dass das Gelenk in ein Lagerauge eines Fahrzeugbauteils eingepresst wird, ohne eine auf die Gelenkschale wirkende radiale Spannung zu verändern oder zu stark zu verändern. Das bei der Herstellung des Gelenks vorgesehene bzw. bei dessen Herstellung eingestellte Reibmoment bleibt unverändert oder wird lediglich gering bzw. vernachlässigbar beeinflusst.

Bei dem bekannten Stand der Technik entstehen durch das Einpressen der beiden Verschlussringe im Bereich der beiden Randzylinder Luftspalte zwischen der Innenhülse und der Außenhülse. Aufgrund des Einpressens des Gelenkes in ein Lagerauge eines Fahrzeugbauteils wird dieser Luftspalt aufgebraucht. Die Ausführungsformen gemäß dem Dokument DE 10 2012 207 527 A1 sind auf Hülsengelenke beschränkt, die symmetrisch zu einer rechtwinklig zur Axialachse angeordneten Symmetrieachse ausgebildet sind. Insbesondere sind zwei Verschlussringe in axial voneinander beabstandeten Endbereichen der Außenhülse eingepresst. Üblicherweise haben derartige Gelenke axial keine Vorzugsrichtung. Somit sind derartige Gelenke in der Regel nur radial belastbar. Insbesondere vermeidet man eine dynamische Belastung der Verschlussringe, da andernfalls ein Gelenkverschleiß und/oder Undichtigkeiten auftreten können.

Für den Fall, dass jedoch hohe axiale Lasten von dem Gelenk aufgenommen werden sollen, können rechtwinklig zur Axialachse des Gelenks unsymmetrisch ausgebildete Ausführungsformen eingesetzt werden. Hierbei ist jedoch von Nachteil, dass nicht mehr zwei Verschlussringe eingesetzt werden können und somit kein Luftspalt bzw. über die gesamte Länge der Innenhülse sich erstreckender Freiraum im Hinblick auf das Einpressen des Gelenks in ein Lagerauge bereitgestellt werden kann.

Es ist die der Erfindung zu Grunde liegende Aufgabe, ein Gelenk und ein Verfahren der eingangs genannten Art derart weiter zu entwickeln, dass ein Einpressen des Gelenks in ein Lagerauge keine oder allenfalls geringe Auswirkungen auf das Bewegungswiderstandsmoment des Gelenks hat. Vorzugsweise hat das Gelenk eine axiale Vorzugsrichtung zum Aufnehmen einer axialen Last. Insbesondere soll eine alternative Ausführungsform bereitgestellt werden.

Die der Erfindung zu Grunde liegende Aufgabe wird mit einem Gelenk nach Anspruch 1 und mittels eines Verfahrens nach Anspruch 10 gelöst. Bevorzugte Weiterbildungen der Erfindung finden sich in den Unteransprüchen und in der nachfolgenden Beschreibung.

Demnach weist das Gelenk für ein Fahrzeug eine Außenhülse, eine Gelenkschale zum Aufnehmen eines bewegbar gelagerten Gelenkinnenteils und eine Innenhülse auf, die mindestens teilweise zwischen der Gelenkschale und der Außenhülse angeordnet ist. Die Innenhülse hat zwei axial voneinander beabstandete am Außenumfang der Innenhülse umlaufende, sich radial nach außen erstreckende bzw. radial nach außen vorstehende Randzylinder und die Randzylinder bilden bzw. bestimmen eine umlaufende Vertiefung in Gestalt einer Nut am Außenumfang der Innenhülse. Des Weiteren erstreckt sich eine integral mit der Innenhülse ausgebildete Presssitzeinrichtung im Bereich mindestens eines Randzylinders der Innenhülse über den Außendurchmesser des Randzylinders hinaus radial nach außen.

Hierbei ist von Vorteil, dass die integral, insbesondere einstückig, mit der Innenhülse ausgebildete Presssitzeinrichtung die Funktion eines, insbesondere weiteren oder zweiten, Verschlussringes übernehmen kann. Somit kann im Bereich des Randzylinders der Innenhülse mit der integralen Presssitzeinrichtung auf einen separaten Verschlussring oder Verschlussdeckel verzichtet werden. Vorzugsweise weist das Gelenk lediglich einen einzelnen als separates Bauteil ausgebildeten Verschlussring oder Verschlussdeckel auf. Hierdurch wird die Vielfalt möglicher Konstruktionen vergrößert. Insbesondere ist ein Gelenk oder Einpressgelenk mit einer axialen Vorzugsrichtung zum Aufnehmen hoher axialer Lasten realisierbar.

Vorzugsweise weist das Gelenk eine Gelenkachse und/oder Axialachse auf, um die das Gelenk, die Außenhülse und/oder das Gelenkinnenteil bewegbar ist. Vorzugsweise erstreckt sich die Gelenkachse in axialer Richtung der Außenhülse. Die Gelenkachse und die axiale Achse der Außenhülse können zusammenfallen. Insbesondere erstrecken sich die Außenhülse und/oder die Innenhülse in axialer Richtung des Gelenks und/oder in axialer Richtung der Gelenkachse. Vorzugsweise handelt es sich bei der Gelenkachse um eine Längsmittelachse des Gelenks. Insbesondere ist das Gelenk bezüglich der Gelenkachse, der Axialachse und/oder der Längsmittelachse rotationssymmetrisch oder im Wesentlichen rotationssymmetrisch ausgebildet. Die Gelenkachse, die Axialachse und/oder die Längsmittelachse des Gelenks kann durch einen Mittelpunkt des, insbesondere kugelartigen oder kugelförmigen, Gelenkinnenteils verlaufen.

Im Rahmen der vorliegenden Anmeldung kann der Ausdruck "radial" eine oder jedwede Richtung kennzeichnen, die senkrecht zur axialen Richtung des Gelenks, der Gelenkachse, der Axialachse und/oder der Längsmittelachse verläuft. Die Außenhülse, die Innenhülse und/oder die Gelenkschale können ein Gelenkgehäuse bilden oder Bestandteil eines Gelenkgehäuses sein. Insbesondere ist das Gelenkinnenteil drehbar und/oder kippbar in der Gelenkschale gelagert. Vorzugsweise ist unter einem Randzylinder ein sich radial nach außen vorstehender Rand der Innenhülse zu verstehen. Insbesondere definieren und/oder bestimmen die beiden Randzylinder die beiden axial voneinander beabstandeten Enden der Innenhülse. Die Randzylinder können ringartig und/oder ringförmig ausgebildet.

Nach einer weiteren Ausführungsform erstreckt sich die Presssitzeinrichtung ausgehend vom Randzylinder, insbesondere der Außenumfangsfläche des Randzylinders, der Innenhülse radial nach außen. Ist die Innenhülse in die Außenhülse eingepresst, liegt die Presssitzeinrichtung an der Außenhülse an. Die Presssitzeinrichtung kann sich ausgehend von dem Außenumfang und/oder der Außenumfangsfläche des Randzylinders radial nach außen in Richtung einer Innenseite der Außenhülse erstrecken. Insbesondere weist die Innenhülse im Bereich der Presssitzeinrichtung ihren größten Außendurchmesser auf. Vorzugsweise ist der Außendurchmesser der Innenhülse, insbesondere im nichtmontierten Zustand der Innenhülse in der Außenhülse, größer als der Innendurchmesser der Außenhülse. Hierdurch ist ein Presssitz der Innenhülse innerhalb der Außenhülse realisierbar.

Insbesondere ist zwischen der Innenhülse und der Außenhülse mindestens ein umlaufender Freiraum, vorzugsweise zwei umlaufende Freiräume, herstellbar. Bis auf die Ausnahme aufgrund der Presssitzeinrichtung kann sich der Freiraum oder können sich die Freiräume über im Wesentlichen die Länge der Innenhülse, insbesondere über deren Gesamtlänge, erstrecken. Vorzugsweise ergibt sich dieser Freiraum, insbesondere die beiden Freiräume, in einem zusammengesetzten Zustand des Gelenks und in einem in Bezug zu einem Fahrwerkbauteil unmontierten Zustand. Insbesondere sind mindestens zwei Freiräume und/oder Spalten mittels der Presssitzeinrichtung voneinander getrennt. Bei der Länge der Innenhülse handelt es sich vorzugsweise um deren Länge in axialer Richtung. Aufgrund des mindestens einen Freiraums und/oder Spalts steht die Innenhülse, insbesondere in radialer Richtung, bis auf die Presssitzeinrichtung nicht mit der Außenhülse in Berührung. Somit kann die Innenhülse derart in der Außenhülse anordenbar sein, dass lediglich die Presssitzeinrichtung an der Innenseite der Außenhülse anliegt. Hierdurch ist das Gelenk in ein Lagerauge eines Fahrzeugbauteils unter Durchmesserreduzierung der Außenhülse einpressbar, ohne dass diese Durchmesserreduzierung einen oder einen erheblichen Einfluss auf die Gelenkschale und/oder die Lagerung nimmt. Vorzugsweise ist der Durchmesser der Außenhülse, insbesondere beim Einpressen des Gelenks in ein Lagerauge, unter Verkleinerung der radialen Abmessungen des Freiraums reduzierbar, insbesondere ohne dass die Gelenkschale beeinflusst wird. Dies kann solange erfolgen, bis der Freiraum und/oder Spalt soweit reduziert ist, dass die Außenhülse, insbesondere im Bereich der Randzylinder, an der Innenhülse anliegt. Erst anschließend kann eine weitere Durchmesserreduzierung der Außenhülse zu einer Durchmesserreduzierung der Innenhülse führen und somit Einfluss auf die Gelenkschale nehmen. Vorzugsweise ist der mindestens eine Freiraum als ein Spalt ausgebildet. Gemäß einer Weiterbildung ist innerhalb der Außenhülse ein Verschlussring oder Verschlussdeckel angeordnet. Hierbei kann die Presssitzeinrichtung dem von dem Verschlussring oder Verschlussdeckel abgewandten Randzylinder zugeordnet sein. Hierdurch kann die Presssitzeinrichtung die Funktion eines zusätzlichen oder zweiten Verschlussringes oder Verschlussdeckels übernehmen. Vorzugsweise ist die Presssitzeinrichtung ringförmig ausgebildet.

Der Verschlussring, der Verschlussdeckel und/oder die Presssitzeinrichtung können in radialer Richtung an der Außenhülse an und/oder radial gegen die Außenhülse gespannt sein. Insbesondere ist der Verschlussring, der Verschlussdeckel und/oder die Presssitzeinrichtung in die Außenhülse eingepresst. Mindestens ein Teil der bei einer Durchmesserreduzierung der Außenhülse auftreffenden Kräfte kann in den Verschlussring, den Verschlussdeckel und/oder die Presssitzeinrichtung eingeleitet werden. Der Verschlussring, der Verschlussdeckel, die Presssitzeinrichtung, die Innenhülse und/oder die Außenhülse kann aus Metall, insbesondere aus Stahl, bestehen. Der Verschlussring, der Verschlussdeckel und die Presssitzeinrichtung können den gleichen Außendurchmesser aufweisen. An dem Verschlussring und/oder den von dem Verschlussring oder von dem Verschlussdeckel abgewandten Ende der Innenhülse kann jeweils ein Dichtungsbalg gelagert sein. Der Dichtungsbalg kann sich bis zum Gelenkinnenteil erstrecken und dichtend an diesem anliegen.

Nach einer weiteren Ausführungsform ist die Presssitzeinrichtung als eine radial nach außen vorstehende Kante, insbesondere mindestens eines Randzylinders, ausgebildet. Insbesondere ist die Presssitzeinrichtung als ein radial nach außen vorstehender Steg ausgebildet. Somit kann die Presssitzeinrichtung im Vergleich zum Randzylinder vergleichsweise schmal und/oder filigran ausgebildet sein. Bevorzugt ist die Breite der als Kante und/oder Steg ausgebildeten Presssitzeinrichtung in Axialrichtung des Gelenks und/oder in Längsrichtung der Innenhülse kleiner bzw. schmaler als die Breite des Randzylinders. Die Presssitzeinrichtung kann den Außenumfang der Innenhülse und/oder des Randzylinders ringartig umgeben. Die Presssitzeinrichtung kann die Funktion einer Haltenase realisieren und/oder als eine, insbesondere ringförmige, Haltenase ausgebildet sein. Vorzugsweise ist die Presssitzeinrichtung derart ausgebildet, dass die Presssitzeinrichtung beim Einpressen des Gelenks in ein Lagerauge vernachlässigbar ist. Aufgrund eines Einpressens des Gelenks in ein Lagerauge, insbesondere eines Fahrzeugbauteils, kann die Presssitzeinrichtung mittels der Außenhülse platt gedrückt und/oder in die Außenhülse eingedrückt werden.

Gemäß einer Weiterbildung bildet die Presssitzeinrichtung, insbesondere in einem zusammengesetzten bzw. montierten Zustand des Gelenks und in einem in Bezug zu einem Fahrwerkbauteil und/oder Lagerauge unmontierten Zustand, einen Spalt zwischen der Außenhülse und mindestens dem der Presssitzeinrichtung zugeordneten Randzylinder.

Vorzugsweise ist die Presssitzeinrichtung zum Realisieren einer Widerhakenfunktion ausgebildet. Insbesondere ist die Presssitzeinrichtung zum Halten der Innenhülse in der Außenhülse vor der Montage des Gelenks in ein Fahrwerkbauteil ausgebildet. Somit kann mittels der Presssitzeinrichtung ein Presssitz der Innenhülse innerhalb der Außenhülse realisiert werden. Insbesondere ermöglicht der feste Sitz der Innenhülse innerhalb der Außenhülse und in einem nicht in einem Fahrwerkbauteil und/oder Lagerauge montierten Zustand des Gelenkes ein hinreichend genaues und reproduzierbares Ausmessen des Gelenks, insbesondere der Gelenk-Radialelastizität. Darüber hinaus kann auch eine unerwünschte Geräuschbildung, insbesondere aufgrund eines Klapperns der Innenhülse, aufgrund des Presssitzes der Innenhülse in der Außenhülse vermieden werden.

Vorzugsweise ist der Verschlussring oder Verschlussdeckel axial an der Innenhülse und/oder an der Gelenkschale abgestützt und/oder liegt axial an der Innenhülse und/oder an der Gelenkschale an. Vorzugsweise liegt die Innenhülse, insbesondere mit einer von dem Verschlussring oder von dem Verschlussdeckel abgewandten Anlegefläche an der Außenhülse an. Somit kann beim Einpressen des Verschlussringes oder Verschlussdeckels in die Außenhülse eine axiale Vorspannung der Innenhülse und/oder der Gelenkschale in Bezug auf die Außenhülse realisiert werden. Somit kann die Innenhülse, insbesondere mittels eines einzelnen Verschlussringes oder Verschlussdeckels, axial in der Außenhülse festgelegt werden.

Nach einer weiteren Ausführungsform weist die Innenhülse im Bereich der Presssitzeinrichtung und/oder des Randzylinders mit der Presssitzeinrichtung im Vergleich zum von der Presssitzeinrichtung abgewandten Randzylinder eine radial nach innen gerichtete Materialverdickung und/oder Materialverstärkung auf. Insbesondere ermöglicht die Materialverdickung und/oder Materialverstärkung die Aufnahme und/oder das Einleiten von hohen axialen Kräften, vorzugsweise in axialer Vorzugsrichtung des Gelenks. Die Materialverdickung und/oder Materialverstärkung ist in einem von dem Verschlussring oder Verschlussdeckel abgewandten Bereich der Innenhülse angeordnet. An einer Innenseite der Innenhülse kann die Materialverdickung und/oder Materialverstärkung eine kugelförmige, kugelabschnittsförmige und/oder konkave Ausbildung aufweisen. Insbesondere liegt die Gelenkschale mit einer korrespondierend zu der Innenseite der Innenhülse ausgebildete Außenseite an der Innenseite der Innenhülse an. Insbesondere ist die Materialverdickung und/oder Materialverstärkung derart massiv ausgebildet, dass eine Verformung der Presssitzeinrichtung aufgrund eines Einpressens des Gelenks in ein Lagerauge kein Hindernis und/oder keine Behinderung darstellt.

Gemäß einer Weiterbildung sind der Verschlussring oder der Verschlussdeckel und die Innenhülse mit der integralen Presssitzeinrichtung in die Außenhülse eingepresst. Hierdurch ist ein sicherer Halt der Innenhülse in der Außenhülse, insbesondere in radialer und/oder axialer Richtung, gewährleistet.

Vorzugsweise ist das Gelenk für ein Fahrwerkbauteil ausgebildet, wobei das Fahrwerkbauteil zum Montieren an einem Fahrwerk eines Kraftfahrzeuges vorgesehen ist. Insbesondere ist das Gelenk als ein Kugelhülsengelenk ausgebildet, wobei das Gelenkinnenteil als eine Kugelhülse und die Gelenkschale als eine Kugelschale ausgebildet sein kann. Alternativ kann das Gelenk als ein Kugelzapfengelenk mit einem Kugelzapfen als Gelenkinnenteil ausgebildet sein. Hierbei kann der Kugelzapfen eine Gelenkkugel und einen mit der Gelenkkugel verbundenen Zapfenabschnitt aufweisen. Insbesondere ist das Gelenk als ein Einpressgelenk ausgebildet. Der Zapfenabschnitt kann beispielsweise zylinderartig oder kegelartig ausgebildet sein. Bei dem Fahrwerkbauteil kann es sich um einen Lenker, einen Federlenker, einen Radträger und/oder ein Federbein handeln.

Gemäß dem erfindungsgemäßen Verfahren zum Herstellen eines, insbesondere erfindungsgemäßen, Gelenkes wird in einer Außenhülse eine Innenhülse eingebracht und/oder eingepresst. Eine Gelenkschale wird in der Innenhülse angeordnet und in der Gelenkschale kann ein Gelenkinnenteil bewegbar gelagert werden. Zum mindestens teilweisen radialen Aufweiten der Außenhülse kann ein, vorzugsweise einzelner, Verschlussring oder Verschlussdeckel in die Außenhülse eingepresst werden. Hierdurch kann in einem unmontierten Zustand des Gelenks, insbesondere in Bezug zu einem Lagerauge und/oder Fahrwerkbauteil, ein Spalt und/oder Freiraum zwischen der Innenhülse und der Außenhülse mindestens im Bereich des Verschlussringes oder Verschlussdeckels erzeugt werden. Insbesondere erzeugt das Einpressen des Verschlussringes oder Verschlussdeckels in die Außenhülse die Entstehung eines Spaltes und/oder Freiraumes im Bereich des, insbesondere von der Presssitzeinrichtung abgewandten, Randzylinders. Des Weiteren wird eine innerhalb der Außenhülse angeordnete Presssitzeinrichtung als ein integraler Bestandteil der Innenhülse in die Außenhülse zum mindestens teilweisen radialen Aufweiten der Außenhülse eingepresst. Hierdurch kann ein Spalt und/oder ein Freiraum zwischen der Innenhülse und der Außenhülse im Bereich des von dem Verschlussring oder Verschlussdeckel abgewandten und/oder der Presssitzeinrichtung zugeordneten Randzylinders erzeugt werden.

Insbesondere handelt es sich bei dem gemäß dem erfindungsgemäßen Verfahren hergestellten Gelenk um ein zuvor beschriebenes erfindungsgemäßes Gelenk. Vorzugsweise ist das Verfahren gemäß allen im Zusammenhang mit dem hier beschriebenen erfindungsgemäßen Gelenk erläuterten Ausgestaltungen weitergebildet. Ferner kann das hier beschriebene Gelenk gemäß allen im Zusammenhang mit den Verfahren erläuterten Ausgestaltungen weitergebildet sein.

Aufgrund des Einpressens der Innenhülse mit der integral angeordneten Presssitzeinrichtung einerseits und des Einpressens des Verschlussringes oder Verschlussdeckels andererseits kann zwischen der Innenhülse, insbesondere im Bereich der beiden Randzylinder, und der Außenhülse mindestens jeweils ein umlaufender Freiraum und/oder ein ringförmiger Spalt geschaffen oder vergrößert werden.

Nach einer weiteren Ausführungsform ist im Bereich eines Randzylinders der Innenhülse, insbesondere im Bereich des von dem Verschlussring oder Verschlussdeckel abgewandten Randzylinders, die sich radial in Richtung der Außenhülse erstreckende Presssitzeinrichtung angeordnet. Insbesondere wird im Bereich des der Presssitzeinrichtung zugeordneten Randzylinders ausschließlich die Presssitzeinrichtung beim Einpressen der Innenhülse in die Außenhülse in Kontakt mit einer Innenseite der Außenhülse gebracht. Somit kann die Innenhülse mittels der Presssitzeinrichtung in einem Presssitz in der Außenhülse befestigt werden. Vorzugsweise wird die Presssitzeinrichtung und der von der Presssitzeinrichtung abgewandte Randzylinder beim Einpressen der Innenhülse in die Außenhülse in Kontakt mit einer Innenseite der Außenhülse gebracht. Insbesondere ist der Außendurchmesser der Innenhülse im Bereich der Presssitzeinrichtung beim Einpressen der Innenhülse in die Außenhülse größer als der Innendurchmesser der Außenhülse. Des Weiteren kann der Außendurchmesser der Innenhülse im Bereich der Randzylinder beim Einpressen in die Außenhülse größer sein als der Innendurchmesser der Außenhülse.

Aufgrund der Presssitzeinrichtung wird ein Presssitz bzw. ein Anliegen des der Presssitzeinrichtung zugeordneten Randzylinders an der Innenseite der Außenhülse vermieden. Beim Einpressen der Innenhülse in die Außenhülse kann der von der Presssitzeinrichtung abgewandte Randzylinder an der Innenseite der Außenhülse zu liegen kommen. Aufgrund eines anschließenden Einpressens des Verschlussringes oder Verschlussdeckels in die Außenhülse kann ein Presssitz und/oder ein Anliegen des von der Presssitzeinrichtung abgewandten Randzylinders zwischen der Innenhülse und der Innenseite der Außenhülse gelöst werden. Hierzu kann der Verschlussring oder Verschlussdeckel beim Einpressen in die Außenhülse einen Außendurchmesser aufweisen, der größer ist als der Außendurchmesser der Innenhülse im Bereich des Randzylinders. Insbesondere ist der Außendurchmesser des Verschlussringes oder Verschlussdeckels größer als der Innendurchmesser der Außenhülse. Vorzugsweise ist der Außendurchmesser des Verschlussringes oder Verschlussdeckels und der Außendurchmesser der Innenhülse im Bereich der Presssitzeinrichtung identisch. Bevorzugt wird der Verschlussring oder Verschlussdeckel benachbart zu dem von der Presssitzeinrichtung abgewandten Randzylinder angeordnet.

Gemäß einer Weiterbildung wird zunächst die Innenhülse mit der Presssitzeinrichtung und darauf folgend der Verschlussring oder Verschlussdeckel in die Außenhülse eingepresst. Vorzugsweise wird der Verschlussring solange in die Außenhülse, insbesondere in axialer Richtung, eingepresst, bis er axial an der Innenhülse anliegt. Insbesondere liegt der Verschlussring oder Verschlussdeckel in axialer Richtung auf einer von der Presssitzeinrichtung abgewandten Seite an der Innenhülse an.

Vorzugsweise wird aufgrund des Einpressens der Innenhülse und des Verschlussringes oder Verschlussdeckels jeweils ein Spalt zwischen in axialer Richtung der Innenhülse beabstandeter Randzylinder und der Außenhülse gebildet. Somit kann ein erster Spalt im Bereich eines ersten Randzylinders und ein zweiter Spalt im Bereich eines zweiten Randzylinders realisiert werden.

Zwischen dem Einpressen der Innenhülse und dem Einpressen des Verschlussringes oder Verschlussdeckels kann die Gelenkschale in die Innenhülse eingesetzt, insbesondere eingepresst, werden. Hieran anschließend kann, insbesondere vor dem Einpressen des Verschlussringes oder Verschlussdeckels, das Gelenkinnenteil in der Gelenkschale gelagert bzw. angeordnet werden. Somit wird bevorzugt das Gelenkinnenteil in der Gelenkschale vor dem Einsetzen und/oder Einpressen der Gelenkschale in die Innenhülse gelagert.

Nachdem die Innenhülse und/oder der Verschlussring oder der Verschlussdeckel in die Außenhülse eingepresst worden sind, kann das jeweils zugeordnete axiale Ende der Außenhülse radial nach innen umgeformt, insbesondere abgebogen bzw. verrollt, werden. Insbesondere bilden die radialen Enden der Außenhülse nach ihrem Umformen Axialanschläge für den Verschlussring oder Verschlussdeckel bzw. für die Innenhülse, insbesondere eine Anlegefläche der Innenhülse.

Vorzugsweise wird das Gelenk, insbesondere nach dem Einpressen des Verschlussringes oder Verschlussdeckels in die Außenhülse und/oder nach dem Umformen der axialen Enden, in ein Lagerauge eines Fahrwerkbauteils unter Verringerung des Durchmessers der Außenhülse eingepresst. Dabei werden insbesondere die radialen Abmessungen des mindestens einen Freiraums und/oder Spaltes, vorzugsweise im Bereich der Randzylinder, verkleinert und/oder aufgebraucht. Beispielsweise wird durch das Einpressen der Außenhülse in das Lagerauge der Durchmesser der Außenhülse soweit reduziert, dass diese die Innenhülse, insbesondere im Bereich der Randzylinder, berührt. Hierbei kann die Presssitzeinrichtung zwischen der Innenhülse und der Außenhülse mindestens teilweise verformt bzw. flachgedrückt und/oder in die Innenseite der Außenhülse eingedrückt werden.

Wird das Gelenk in das Lagerauge des Fahrwerkbauteils eingepresst, so hat die Durchmesserreduzierung der Außenhülse keine oder lediglich eine geringfügige Auswirkung auf die radiale Vorspannung der Lagerung des Gelenkinnenteils. Dies ist solange gegeben, bis eine weitere Durchmesserreduzierung der Außenhülse maßlichen Einfluss auf die Innenhülse nimmt. Bis es jedoch zu diesem Einfluss kommt, wird die Einpresskraft im Wesentlichen von dem Verschlussring und der Presssitzeinrichtung aufgenommen.

Des Weiteren kann in einem axial mittleren Bereich der Außenumfangsfläche der Innenhülse, insbesondere zwischen den beiden Randzylindern, die Vertiefung und/oder ein Freiraum vorhanden sein. Hierbei kann die Vertiefung und/oder der Freiraum umlaufend, nutartig, zylinderartig und/oder ringförmig ausgebildet sein. Hierdurch kann eine weitere Möglichkeit gegeben sein, vorhandene maßliche Überdeckungen weniger stark auf die Lagerung des Gelenkinnenteils einwirken zu lassen. Sollte sich dennoch eine Durchmesserreduzierung der Innenhülse ergeben oder ist sie wegen einer hohen Belastung des Gelenks sogar erforderlich, so wird die Kraft im Wesentlichen auf die axialen äußeren Bereiche, insbesondere über die Randzylinder, an die Gelenkschale übertragen.

Die integral bzw. einstückig mit der Innenhülse ausgebildete Presssitzeinrichtung kann die Funktion eines, insbesondere zusätzlichen oder zweiten, Verschlussringes übernehmen bzw. einen zusätzlichen oder zweiten Verschlussring ersetzen. Hierbei kann die Presssitzeinrichtung eine Doppelfunktion wahrnehmen. Zum einen ist die Innenhülse mittels der Presssitzeinrichtung innerhalb der Außenhülse in radialer und/oder axialer Richtung festsetzbar. Hierdurch kann ein reproduzierbares Ausmessen des Gelenks erleichtert sein. Zum anderen ist mittels der Presssitzeinrichtung ein Freiraum und/oder Spalt zwischen der Innenhülse, insbesondere einem der Presssitzeinrichtung zugeordneten Randzylinder der Innenhülse, und der Innenseite der Außenhülse zum Ausgleichen einer Durchmesserreduzierung der Außenhülse beim Einpressen des Gelenks in ein Lagerauge realisierbar.

Nachfolgend wird die Erfindung anhand der Figuren näher erläutert. Es zeigen:
- Fig. 1: eine teilweise geschnittene Ansicht eines ersten erfindungsgemäßen Gelenks,
- Fig. 2: eine geschnittene Ansicht eine Außenhülse und einer Innenhülse vor deren Montage miteinander,
- Fig. 3: eine geschnittene Ansicht einer Außenhülse mit einer montierten Innenhülse,
- Fig. 4: eine geschnittene Ansicht der Außenhülse mit der montierten Innenhülse gemäß Fig. 3 und vor der Montage eines Verschlussringes,
- Fig. 5: eine geschnittene Ansicht der Außenhülse mit der montierten Innenhülse gemäß Fig. 3 und einem montierten Verschlussring,
- Fig. 6: eine teilweise geschnittene Ansicht des erfindungsgemäßen Gelenks gemäß Fig. 1 nach dem Einpressen in ein Lagerauge,
- Fig. 7: ein schematisches Ablaufdiagramm für ein erfindungsgemäßes Verfahren, und
- Fig. 8: eine teilweise geschnittene Ansicht eines weiteren erfindungsgemäßen Gelenks.

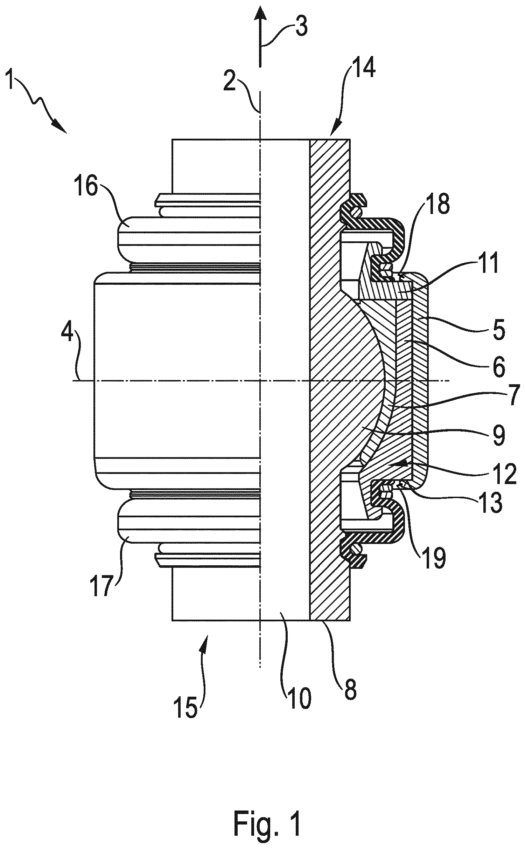

Figur 1 zeigt eine teilweise geschnittene Ansicht eines ersten erfindungsgemäßen Gelenks 1. Bei diesem Ausführungsbeispiel ist das Gelenk 1 als ein Hülsengelenk, nämlich ein Kugelhülsengelenk ausgebildet. Das Gelenk 1 ist zu einer Gelenkachse bzw. Längsmittelachse 2 rotationssymmetrisch ausgebildet. Die Gelenkachse bzw. Längsmittelachse 2 verläuft in axialer Richtung des Gelenks 1 gemäß Pfeil 3. Gemäß dieser Darstellung ist links der Längsmittelachse 2 das Gelenk 1 in Draufsicht dargestellt, wohingegen rechts von der Längsmittelachse 2 ein Längsschnitt durch das Gelenk 1 gezeigt ist. Eine Quermittelachse 4 ist rechtwinklig zu der Längsmittelachse 2 angeordnet, wobei die Längsmittelachse 2 und die Quermittelachse 4 sich in einem Mittelpunkt des Gelenks 1 schneiden.

In eine Außenhülse 5 ist eine Innenhülse 6 eingebracht. Innerhalb der Innenhülse 6 ist eine Gelenkschale 7 angeordnet. In der Gelenkschale 7 ist ein Gelenkinnenteil 8 bewegbar gelagert. Bei diesem Ausführungsbeispiel ist die Gelenkschale 7 als eine Kugelschale und das Gelenkinnenteil 8 als eine Kugelhülse ausgebildet. Das Gelenkinnenteil 8 hat eine Gelenkkugel 9, die drehbar und/oder schwenkbar in Bezug zu der Gelenkschale 7 gelagert ist. Durch das Gelenkinnenteil 8 erstreckt sich in axialer Richtung 8 ein Durchgangsloch 10. Das Durchgangsloch 10 ist hier beispielshaft zylindrisch ausgebildet. In die Außenhülse 5 ist ein Verschlussring 11 eingepresst. Der Verschlussring 11 liegt axial an der Gelenkschale 7 und der Innenhülse 6 an. In einem von dem Verschlussring 11 abgewandten Bereich bzw. an einem von dem Verschlussring 11 abgewandten Ende der Innenhülse 6 weist die Innenhülse 6 eine sich radial nach innen erstreckende Materialverdickung bzw. Materialverstärkung 12 auf. Hierbei ist unter "radial" eine Ausrichtung rechtwinklig zur axialen Richtung gemäß Pfeil 3 bzw. der Längsmittelachse 2 zu verstehen. Im Bereich der Materialverstärkung 12 und an einer von dem Verschlussring 11 abgewandten Seite hat die Innenhülse 6 eine Anlegefläche 13. Die Anlegefläche 13 liegt axial an der Innenseite der Außenhülse 5 an. Bei diesem Ausführungsbeispiel umgreift die Außenhülse 5 die Innenhülse 6 im Bereich der Materialverstärkung 12.

Das Gelenkinnenteil 8 erstreckt sich axial beidseitig aus der Außenhülse 5 heraus und dabei auch axial durch den Verschlussring 11 und die Innenhülse 6 hindurch. An außerhalb der Außenhülse 5 angeordneten axialen Enden 14 und 15 des Gelenkinnenteils 8 ist jeweils ein Dichtungsbalg 16 bzw. 17 befestigt. Der Dichtungsbalg 16 erstreckt sich von dem axialen Ende 14 bis zum Verschlussring 11 und ist an diesem befestigt. Der Dichtungsbalg 17 erstreckt sich von dem axialen Ende 15 bis zur Innenhülse 6 und ist an dieser befestigt. Des Weiteren sind axiale Enden 18, 19 der Außenhülse 5 jeweils radial nach innen umgebogen, so dass das Ende 18 axial an dem Verschlussring 11 und das Ende 19 axial an der Anlegefläche 13 anliegt. Somit können die axialen Enden 18, 19 den Verschlussring 11 und die Innenhülse 6 auch formschlüssig in der Außenhülse 5 festsetzen.

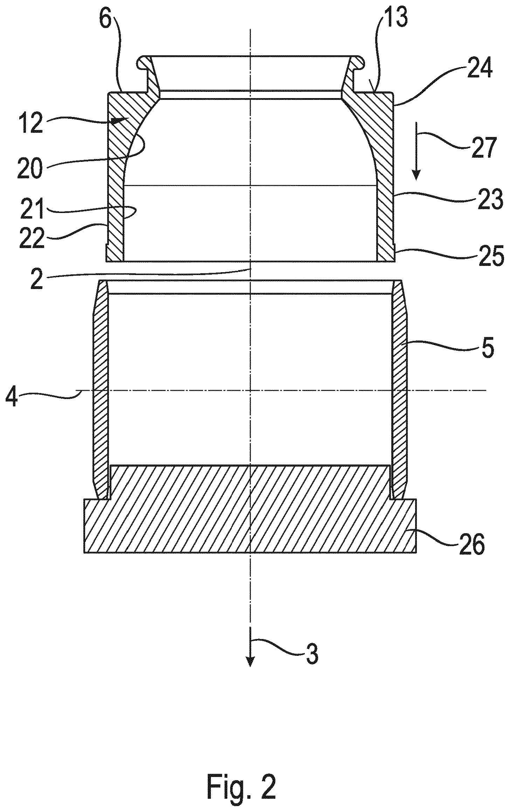

Figur 2 zeigt eine geschnittene Ansicht der Außenhülse 5 und der Innenhülse 6 vor deren Montage miteinander. Die Innenhülse 6 weist im Bereich der Materialverstärkung 12 einen konkav und/oder kugelabschnittsförmig ausgebildeten Innenseitenbereich 20 auf. In einem von der Anlegefläche 13 abgewandten Bereich geht der Innenseitenbereich 20 der Außenhülse 5 in einen ringförmigen und/oder zylindrischen Innenseitenbereich 21 über. In einem axial mittleren Bereich einer Außenumfangsfläche 22 der Innenhülse 6 ist eine koaxial umlaufende Vertiefung 23 eingebracht, die axial beidseitig begrenzt ist. Bei diesem Ausführungsbeispiel ist die Vertiefung 23 nutartig ausgebildet. Die axial voneinander beabstandeten Ränder der Innenhülse 6 sind bei diesem Ausführungsbeispiel als Randzylinder 24, 25 ausgebildet. Die Randzylinder 24, 25 stehen radial nach außen über die Vertiefung 23 hinaus. Somit weist die Innenhülse 6 im Bereich der beiden Randzylinder 24, 25 einen größeren Außendurchmesser als im Bereich der Vertiefung 23 auf.

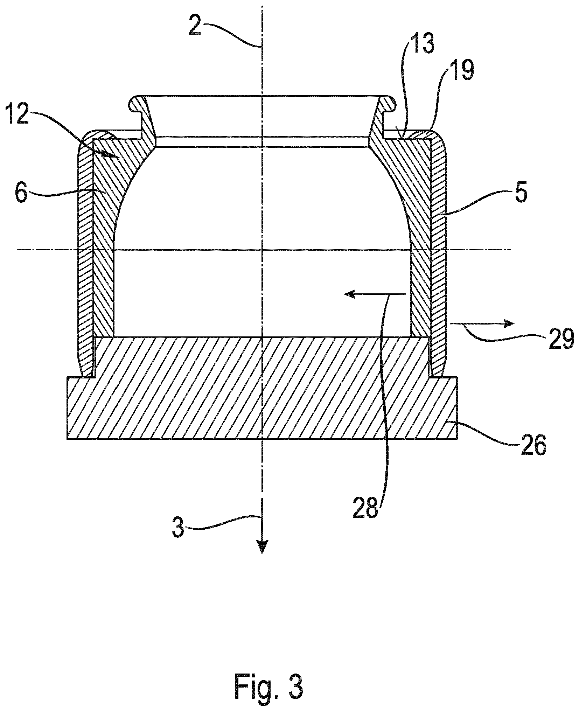

Des Weiteren ist der Außendurchmesser der Innenhülse 6 im Bereich der Randzylinder 24, 25 größer als der Innendurchmesser der Außenhülse 5. Gemäß der Figur 2 und der nachfolgend noch näher beschriebenen Figuren 3 bis 5 werden unterschiedliche Schritte zur Herstellung des Gelenks 1 dargestellt. Gemäß Figur 2 wird die Außenhülse 5 auf ein Montagewerkzeug 26 aufgesetzt. Anschließend wird die Innenhülse 6 in Richtung des Pfeils 3 in die Außenhülse 5 eingepresst. Die zum Einpressen erforderliche Kraft ist durch den Pfeil 27 angedeutet. Vor dem Einpressen der Innenhülse 6 in die Außenhülse 5 ist der Außendurchmesser der Innenhülse 6 zumindest im Bereich der Randzylinder 24, 25 größer als der Innendurchmesser der Außenhülse 5.

Figur 3 zeigt eine geschnittene Ansicht der Außenhülse 5 mit einer montierten Innenhülse 6. Hierbei ist die Innenhülse 6 mit einem Presssitz in der Außenhülse 5 angeordnet. Während des Einpressens der Innenhülse 6 in die Außenhülse 5 hat sich der Durchmesser der Innenhülse 6 reduziert und der Durchmesser der Außenhülse 5 vergrößert. Diese Durchmesseränderungen sind durch die Pfeile 28 bzw. 29 angedeutet. Zudem ist erkennbar, dass das axiale Ende 19 der Außenhülse 5 radial nach innen umgeformt worden ist, so dass das axiale Ende 19 an der Anlegefläche 13 der Innenhülse 6 anliegt. Bei diesem Ausführungsbeispiel erstreckt sich das radiale Ende 19 der Außenhülse 5 rechtwinklig zur Längsmittelachse 12. Korrespondierend hierzu erstreckt sich die Anlegefläche 13 in radialer Richtung, bei diesem Ausführungsbeispiel nämlich rechtwinklig zur Längsmittelachse 2.

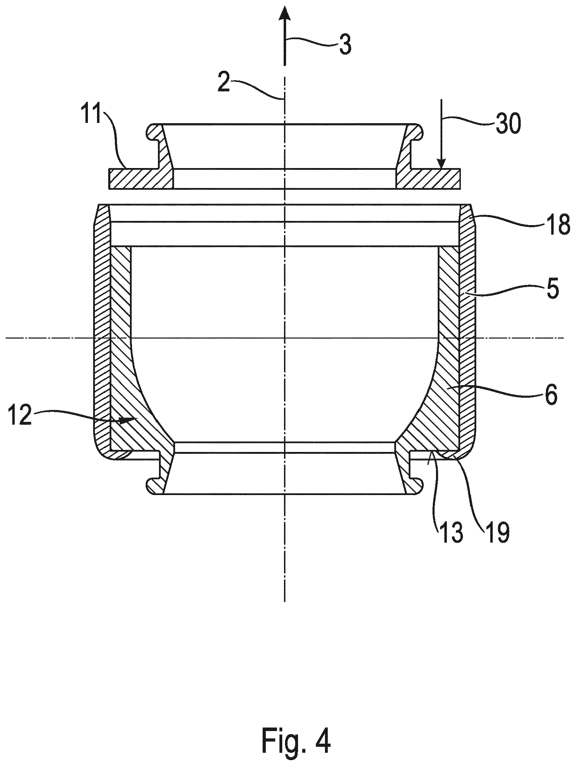

Figur 4 zeigt eine geschnittene Ansicht der Außenhülse 5 mit der montierten Innenhülse 6 gemäß Figur 3 und vor der Montage des Verschlussringes 11. Die Außenhülse 5 mit der eingepressten Innenhülse 6 ist von dem Montagewerkzeug 26 abgelöst worden, um anschließend den Verschlussring 11 in Gegenrichtung des Pfeils 3 in die Außenhülse 5 einzupressen, bis der Verschlussring 11 axial an der Innenhülse 6 anliegt. Aus der Figur 4 ist der Zustand vor dem Einpressen des Verschlussringes 11 ersichtlich, wobei die zum Einpressen erforderliche Kraft mit dem Pfeil 30 angedeutet ist. Der Verschlussring 11 wird in einem von der Materialverstärkung 12 oder dem axialen Ende 19 abgewandten Bereich des axialen Endes 18 in die Außenhülse 5 eingepresst.

Gemäß der Figur 4 ist die Gelenkschale 7 und das Gelenkinnenteil 8 für eine bessere Übersichtlichkeit nicht näher dargestellt. Vor dem Einpressen des Verschlussringes 11 erfolgt üblicherweise zunächst die Anordnung der Gelenkschale 7 und des Gelenkinnenteils 8 in der Innenhülse 6. Erst anschließend wird der Verschlussring 11 in die Außenhülse 5 eingepresst. Hierbei wird die Gelenkschale 7 mit Hilfe des Verschlussrings 11 axial in Richtung der Materialverstärkung 12 der Innenhülse 6 vorgespannt.

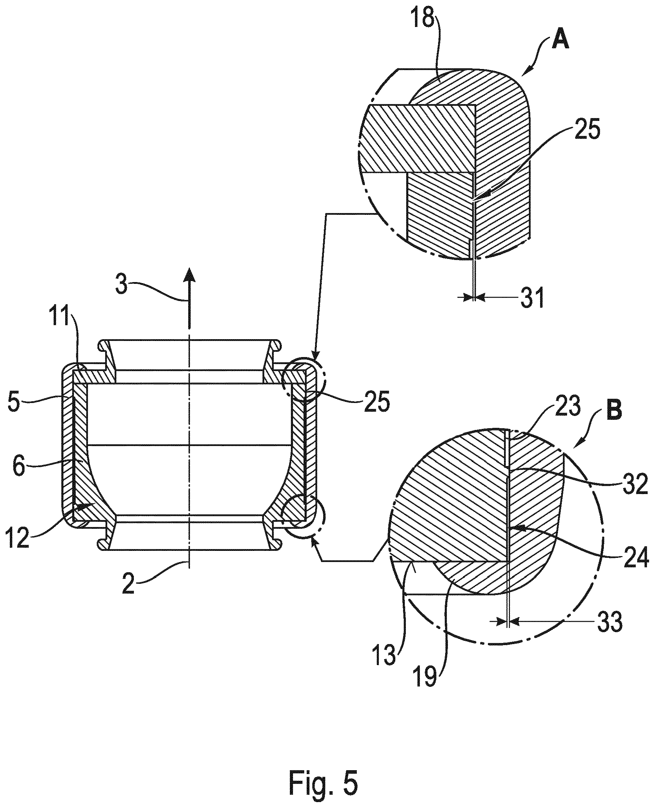

Figur 5 zeigt eine geschnittene Ansicht der Außenhülse 5 mit der montierten Innenhülse 6 gemäß Figur 3 und dem montierten Verschlussring 11. Des Weiteren zeigt die Figur 5 zwei Teilausschnitte A und B. Hiernach ist der eingepresste Zustand des Verschlussringes 11 ersichtlich, wobei aufgrund des Einpressens des Verschlussringes 11 dieser in seinem Außendurchmesser reduziert wurde und die Außenhülse 5 mindestens im Bereich des Verschlussringes 11 und des Randzylinders 25 in ihrem Durchmesser vergrößert worden ist. Die aufgrund des Einpressens des Verschlussringes 11 bewirkte Durchmesservergrößerung der Außenhülse 5 kann auch als eine radiale Aufweitung bezeichnet werden. Diese radiale Aufweitung ist so groß, dass der Presssitz der Innenhülse 6 im Bereich des Randzylinders 25 gelöst wird.

Gemäß dem Teilausschnitt A entsteht somit aufgrund des Einpressens des Verschlussringes 11 ein Freiraum oder Spalt 31 zwischen der Außenumfangsfläche der Innenhülse 6 im Bereich des Randzylinders 25 und der Innenseite der Außenhülse 5.

Anschließend an das Einpressen des Verschlussringes 11 wird das axiale Ende 18 der Außenhülse 5 radial nach innen umgeformt. Hierdurch kann der Verschlussring 11 in axialer Richtung gemäß Pfeil 3 zwischen dem axialen Ende 18 und der Innenhülse 6 festgesetzt werden.

Teilausschnitt B zeigt eine Presssitzeinrichtung 32. Die Presssitzeinrichtung 32 ist als ein integraler bzw. einstückiger Bestandteil der Innenhülse 6 ausgebildet. Bei diesem Ausführungsbeispiel ist die Presssitzeinrichtung 32 als ein den Außenumfang der Innenhülse 6 umlaufender, ringförmiger Steg ausgebildet. Die Presssitzeinrichtung 32 erstreckt sich radial nach außen. Der Außendurchmesser der Presssitzeinrichtung 32 ist größer als der Außendurchmesser der Innenhülse 6 im Bereich des Randzylinders 24, wodurch die Presssitzeinrichtung radial nach außen über die Randzylinder 24, 25 hinaus steht. Des Weiteren ist die Presssitzeinrichtung 32 bei diesem Ausführungsbeispiel im Bereich einer Kante des Randzylinders 25 angeordnet. Des Weiteren ist die Presssitzeinrichtung 32 gemäß diesem Beispiel im Bereich einer axial nach innen gerichteten Kante des Randzylinders 24 angeordnet.

Mittels der Presssitzeinrichtung 32 ist die Innenhülse 6 positionsfest, insbesondere in radialer Richtung, im Bereich des Randzylinders 24 in die Außenhülse 5 eingepresst. Im Vergleich zum Randzylinder 24 ist die Presssitzeinrichtung 32 vergleichsweise schmal ausgebildet. Aufgrund der Presssitzeinrichtung 32 ist zwischen der Außenumfangsfläche der Innenhülse 6 im Bereich des Randzylinders 24 und der Innenseite der Außenhülse 5 ein Freiraum bzw. Spalt 33 gebildet.

Bei diesem Ausführungsbeispiel weist die Presssitzeinrichtung 32 eine Widerhakenkontur auf. Hierdurch ist die Gefahr eines unerwünschten Lösens der Innenhülse 6 in axialer Richtung weiter reduzierbar.

Die Spalte 31, 33 sowie die Vertiefung 23 bilden ringförmige Freiräume zwischen der Innenhülse 6 und der Außenhülse 5. Bei diesem Ausführungsbeispiel sind der Verschlussring 11 und die Presssitzeinrichtung 32 derart aufeinander abgestimmt, dass die Breite der Spalte 31, 33 identisch oder mindestens im Wesentlichen gleich groß sind.

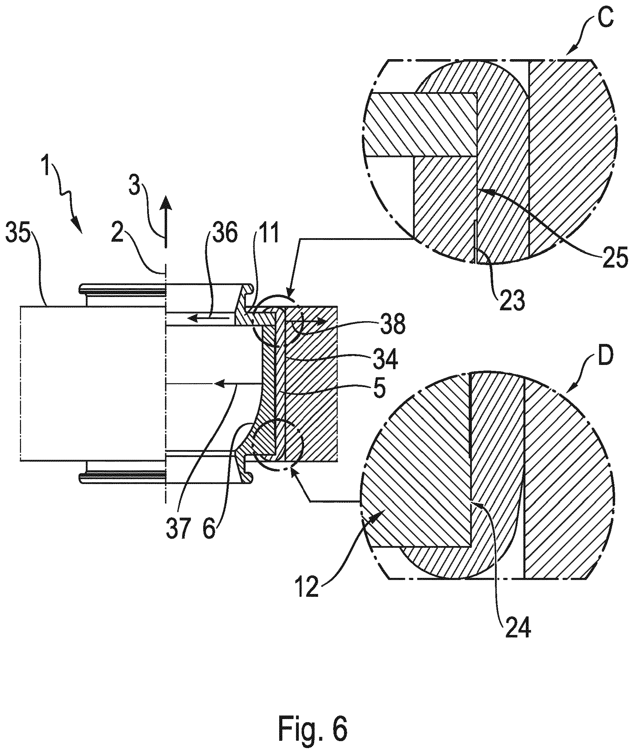

Figur 6 zeigt eine teilweise geschnittene Ansicht des erfindungsgemäßen Gelenks 1 gemäß Figur 1 nach dem Einpressen in ein Lagerauge 34. Für eine bessere Übersichtlichkeit ist auf die Darstellung der Gelenkschale 7 und des Gelenkinnenteils 8 verzichtet worden. Des Weiteren sind zwei Teilausschnitte C und D gezeigt. Das Lagerauge 34 ist Bestandteil eines Fahrwerkbauteils 35. Bei diesem Ausführungsbeispiels ist das Fahrwerkbauteil 35 als ein Lenker ausgebildet. Links der Längsmittelachse 2 ist ein Teil des Fahrwerkbauteils 35 in Draufsicht dargestellt, wobei rechts der Längsmittelachse 2 ein Teil des Fahrwerkbauteils 35 im Schnitt gezeigt ist.

Bei diesem Ausführungsbeispiel ist das Lagerauge 34 als ein in dem Fahrwerkbauteil 35 angeordnetes, zylindrisches Durchgangsloch ausgebildet. Aufgrund des Einpressens des Gelenks 1 mit der Außenhülse 5 in das Lagerauge 34 wurden die Außenhülse 5, der Verschlussring 11 und die Innenhülse 6 in ihren Durchmessern reduziert. Des Weiteren wurde aufgrund des Einpressens der Durchmesser des Lagerauges 34 vergrößert. Die jeweiligen Durchmesservergrößerungen bzw. Durchmesserreduzierung sind mittels der Pfeile 36, 37 und 38 angedeutet.

Gemäß den Teilausschnitten C und D ist aufgrund der Durchmesserreduzierung der Außenhülse 5 der Spalt 31 und der Spalt 33 verschwunden bzw. der zugehörige Freiraum aufgebraucht worden. Allerdings ist immer noch die Vertiefung 23 zwischen den beiden Randzylindern 24, 25 vorhanden. Somit können die von der Außenhülse 5 in die Innenhülse 6 eingeleiteten Kräfte im Wesentlichen durch, die Randzylinder 24, 25 aufgenommen und/oder weitergeleitet werden. Eine Durchmesserreduzierung der Innenhülse 6 hat eine Erhöhung der radialen Vorspannung der Gelenkschale 7 zur Folge, wobei in axialer Richtung 3 gesehen, die von der Gelenkschale 7 auf die Gelenkkugel 9 ausgeübten Radialkräfte insbesondere auf Höhe der Randzylinder 24, 25 am Größten sind. Des Weiteren kann das Gelenk 1 aufgrund der Materialverstärkung 12 höhere Lasten bzw. Kräfte in einer axialen Vorzugsrichtung aufnehmen. Bei diesem Ausführungsbeispiel ist der axial Vorzugsrichtung zum Aufnehmen von axialen Lasten bzw. Kräften der axialen Richtung gemäß Pfeil 3 entgegen gesetzt.

Beim Einpressen des Gelenks 1 in das Lagerauge 34 wird aufgrund der Durchmesserreduzierung der Außenhülse 5 die Presssitzeinrichtung 32 derart verformt, umgeformt und/oder aufgebraucht, dass die Außenhülse 5 im Bereich der Presssitzeinrichtung 32 bzw. des Randzylinders 24 an der Außenumfangsfläche der Innenhülse 6 zu liegen kommt. Hierbei kann das Material der Presssitzeinrichtung 32 in die Außenhülse 5 hinein und/oder in Richtung der Vertiefung 23 gepresst und/oder umgeformt werden. Hierbei dient die Materialverstärkung 12 als eine Art Gegenlager für die Umformung bzw. Verformung der Presssitzeinrichtung 32 beim Einpressen des Gelenks 1 bzw. der Außenhülse 5 in das Lagerauge 34.

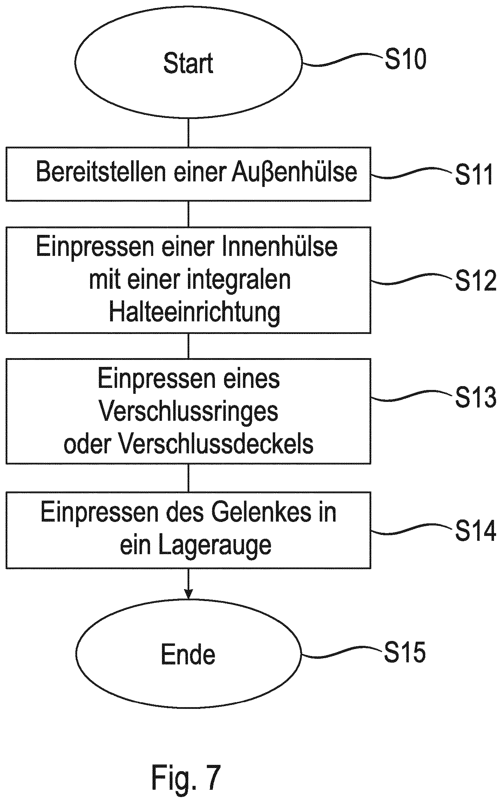

Figur 7 zeigt ein schematisches Ablaufdiagramm für ein erfindungsgemäßes Verfahren. Nach dem Start des erfindungsgemäßen Verfahrens gemäß Schritt S10 wird gemäß Schritt S11 die Außenhülse 5 bereitgestellt. Hierzu wird die Außenhülse 5 in ein Montagewerkzeug 26 eingebracht. Sodann folgt gemäß Schritt S12 ein Einpressen der Innenhülse 6 in die Außenhülse 5. Hierbei weist die Innenhülse 6 eine integral bzw. einstückig mit der Innenhülse 6 ausgebildete Presssitzeinrichtung 32 auf. Vor dem Einpressen der Innenhülse 6 in die Außenhülse 5 weist die Innenhülse 6 im Bereich der Randzylinder 24, 25 und der Presssitzeinrichtung 32 einen Außendurchmesser auf, der größer ist, als der Innendurchmesser der Außenhülse 5. Hierbei ist der Außendurchmesser der Presssitzeinrichtung 32 größer als der Außendurchmesser der beiden Randzylinder 24, 25. Somit wird mit dem Einpressen der Innenhülse 6 ein Presssitz der Innenhülse 6 in der Außenhülse 5 hergestellt. In diesem Presssitz liegt die Presssitzeinrichtung 32 und der von der Presssitzeinrichtung 32 beabstandete Randzylinder 25 an der Innenseite der Außenhülse 5 an.

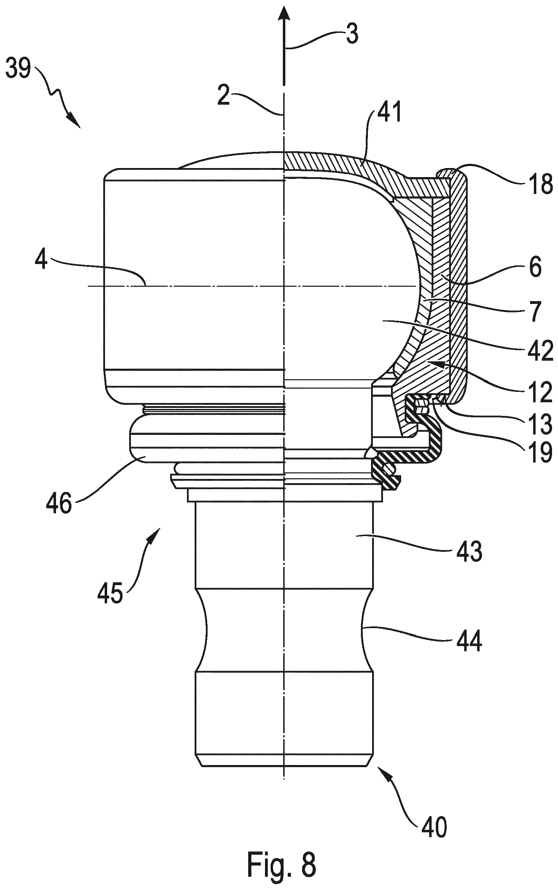

Hieran anschließend erfolgt gemäß Schritt S13 das Einpressen des Verschlussringes 11 in die Außenhülse 5. Hierbei erfolgt das Einpressen des Verschlussringes 11 unmittelbar angrenzend bzw. benachbart zu dem Randzylinder 25. Vor dem Einpressen des Verschlussringes 11 hat dieser einen Außendurchmesser, der größer ist als der Innendurchmesser der Außenhülse 5. Hierdurch wird beim Einpressen des Verschlussringes 11 in die Außenhülse 5 der Presssitz des Randzylinders 25 gelöst. Somit ist mittels des Verschlussringes 11 im Bereich des Randzylinders 25 ein Spalt 31 und mittels der Presssitzeinrichtung 32 im Bereich des Randzylinders 24 ein Spalt 33 gebildet. Wie anhand der nachfolgend beschriebenen Figur 8 gezeigt, kann alternativ und anstelle eines Verschlussringes 11 ein Verschlussdeckel eingesetzt werden, wenn das Gelenk statt als ein Kugelhülsengelenk als ein Kugelzapfengelenk ausgebildet ist.

Hieran anschließend erfolgt gemäß Schritt S14 das Einpressen des Gelenks 1 in ein Lagerauge 34. Aufgrund dieses Einpressvorganges wird der Durchmesser der Außenhülse 5 reduziert und der Freiraum aufgrund der Spalte 31, 33 aufgebraucht. Somit liegen die Außenumfangsflächen der Randzylinder 24, 25 nach dem Einpressen des Gelenks 1 in das Lagerauge 34 an der Innenseite der Außenhülse 5 an. Sodann wird das erfindungsgemäße Verfahren gemäß Schritt S15 beendet.

In einer alternativen Ausführungsform kann das erfindungsgemäße Verfahren zum Herstellen des Gelenks 1 bereits nach Beendigung des Schrittes S13 beendet werden. In einer weiteren alternativen Ausführungsform wird der axiale Rand 19 der Außenhülse 5 nach Durchführung des Schrittes S12 und vor dem Durchführen des Schrittes S13 radial nach innen umgeformt. Des Weiteren kann das axiale Ende 18 der Außenhülse 5 nach dem Einpressen des Verschlussringes 11 gemäß Schritt S13 und vor dem Schritt S14 bzw. dem Ende des Verfahrens radial nach innen umgeformt werden. Aufgrund der Umformung der axialen Enden 18, 19 ist die Innenhülse 6 und/oder die Gelenkschale 7 in axialer Richtung festgesetzt und/oder vorgespannt. Figur 8 zeigt eine teilweise geschnittene Ansicht eines weiteren erfindungsgemäßen Gelenks 39. Funktional gleiche Gegenstände wie zuvor tragen die gleichen Bezugszeichen wie in den Figuren 1 bis 6. Bei diesem Ausführungsbeispiel ist das Gelenk 39 als ein Zapfengelenk, nämlich ein Kugelzapfengelenk ausgebildet. Das Gelenk 39 ist zu einer Gelenkachse bzw. Längsmittelachse 2 rotationssymmetrisch ausgebildet. Die Gelenkachse bzw. Längsmittelachse 2 verläuft in axialer Richtung des Gelenks 39 gemäß Pfeil 3. Gemäß dieser Darstellung ist links der Längsmittelachse 2 das Gelenk 39 in Draufsicht dargestellt, wohingegen rechts von der Längsmittelachse 2 ein Längsschnitt durch das Gelenk 39 gezeigt ist. Eine Quermittelachse 4 ist rechtwinklig zu der Längsmittelachse 2 angeordnet, wobei die Längsmittelachse 2 und die Quermittelachse 4 sich in einem Mittelpunkt des Gelenks 1 schneiden.

In eine Außenhülse 5 ist eine Innenhülse 6 eingebracht. Innerhalb der Innenhülse 6 ist eine Gelenkschale 7 angeordnet. In der Gelenkschale 7 ist ein Gelenkinnenteil 40 bewegbar gelagert. Bei diesem Ausführungsbeispiel ist die Gelenkschale 7 als eine Kugelschale und das Gelenkinnenteil 40 als ein Kugelzapfen ausgebildet. Das Gelenkinnenteil 40 hat eine Gelenkkugel 42, die drehbar und/oder schwenkbar in Bezug zu der Gelenkschale 7 gelagert ist.

In die Außenhülse 5 ist ein Verschlussdeckel 41 eingepresst. Der Verschlussdeckel 41 liegt axial an der Gelenkschale 7 und der Innenhülse 6 an. Bei diesem Ausführungsbeispiel ist der Verschlussdeckel 41 radial nach außen gewölbt ausgebildet. In einem von dem Verschlussdeckel 41 abgewandten Bereich weist das Gelenkinnenteil 40 einen Zapfenabschnitt 43 auf. Der Zapfenabschnitt 43 ist mit der Gelenkkugel 42 verbunden. Bei diesem Ausführungsbeispiel ist der Zapfenabschnitt 43 im Wesentlichen zylinderförmig ausgebildet. Alternativ kann der Zapfenabschnitt 43 beispielsweise kegelförmig ausgebildet sein. Des Weiteren weist der Zapfenabschnitt 43 gemäß dieser beispielhaften Ausführung eine umlaufende Nut 44 auf.

In einem von dem Verschlussdeckel 41 abgewandten Bereich bzw. an einem von dem Verschlussdeckel 41 abgewandten Ende der Innenhülse 6 weist die Innenhülse 6 eine sich radial nach innen erstreckende Materialverdickung bzw. Materialverstärkung 12 auf. Im Bereich der Materialverstärkung 12 und an einer von dem Verschlussdeckel 41 abgewandten Seite hat die Innenhülse 6 eine Anlegefläche 13. Die Anlegefläche 13 liegt axial an der Innenseite der Außenhülse 5 an. Bei diesem Ausführungsbeispiel umgreift die Außenhülse 5 die Innenhülse 6 im Bereich der Materialverstärkung 12.

Das Gelenkinnenteil 40 erstreckt sich mittels des Zapfenabschnittes 43 axial aus der Außenhülse 5 und durch die Innenhülse 6 auf der von dem Verschlussdeckel 41 abgewandten Seite heraus. An einem von dem Verschlussdeckel 41 abgewandten axialen Ende 45 der Außenhülse 5 ist ein Dichtungsbalg 46 befestigt. Der Dichtungsbalg 46 erstreckt sich von einem Außenumfang des Zapfenabschnittes 43 bis zur Innenhülse 6 und ist an dieser befestigt.

Des Weiteren sind axiale Enden 18, 19 der Außenhülse 5 jeweils radial nach innen umgebogen, so dass das Ende 18 axial an dem Verschlussdeckel 41 und das Ende 19 axial an der Anlegefläche 13 anliegt. Somit können die axialen Enden 18, 19 den Verschlussdeckel 41 und die Innenhülse 6 auch formschlüssig in der Außenhülse 5 festsetzen.

Die Herstellung bzw. Montage des Gelenks 39 erfolgt analog zur Beschreibung zum Gelenk 1 gemäß den Figuren 2 bis 7. Somit weist auch das Gelenk 39 eine Presssitzeinrichtung 32 auf. Insoweit wird auf die vorangegangene Beschreibung verwiesen, wobei anstelle des Verschlussringes 11 bei dem Gelenk 39 ein Verschlussdeckel 41 eingesetzt wird.

### Bezugszeichen

- 1: Gelenk
- 2: Längsmittelachse
- 3: Pfeil, axiale Richtung
- 4: Quermittelachse
- 5: Außenhülse
- 6: Innenhülse
- 7: Gelenkschale
- 8: Gelenkinnenteil
- 9: Gelenkkugel
- 10: Durchgangsloch
- 11: Verschlussring
- 12: Materialverstärkung
- 13: Anlegefläche
- 14: Ende Gelenkinnenteil
- 15: Ende Gelenkinnenteil
- 16: Dichtungsbalg
- 17: Dichtungsbalg
- 18: Ende Außenhülse
- 19: Ende Außenhülse
- 20: Innenseitenbereich
- 21: Innenseitenbereich
- 22: Außenumfangsfläche
- 23: Vertiefung
- 24: Randzylinder
- 25: Randzylinder
- 26: Montagewerkzeug
- 27: Pfeil, Kraft
- 28: Pfeil, Durchmesserreduzierung
- 29: Pfeil, Durchmesservergrößerung
- 30: Pfeil, Kraft
- 31: Spalt
- 32: Presssitzeinrichtung
- 33: Spalt
- 34: Lagerauge
- 35: Fahrwerkbauteil
- 36: Pfeil, Durchmesserreduzierung
- 37: Pfeil, Durchmesserreduzierung
- 38: Pfeil, Durchmesservergrößerung
- 39: Gelenk
- 40: Gelenkinnenteil
- 41: Verschlussdeckel
- 42: Gelenkkugel
- 43: Zapfenabschnitt
- 44: Nut
- 45: Ende
- 46: Dichtungsbalg

- A: Teilausschnitt
- B: Teilausschnitt
- C: Teilausschnitt
- D: Teilausschnitt

## Patentansprüche

1. Gelenk für ein Fahrzeug mit einer Außenhülse (5), einer Gelenkschale (7) zum Aufnehmen eines bewegbar gelagerten Gelenkinnenteils (8, 40), einer Innenhülse (6), die mindestens teilweise zwischen der Gelenkschale (7) und der Außenhülse (5) angeordnet ist, wobei die Innenhülse (6) zwei axial voneinander beabstandete am Außenumfang der Innenhülse (6) umlaufende, radial nach außen vorstehende Randzylinder (24, 25) aufweist und die beiden Randzylinder (24, 25) eine umlaufende Vertiefung (23) in Gestalt einer Nut am Außenumfang der Innenhülse (6) bestimmen, **dadurch gekennzeichnet, dass** sich eine integral mit der Innenhülse (6) ausgebildete Presssitzeinrichtung (32) im Bereich mindestens eines Randzylinders (24) der Innenhülse (6) über den Außendurchmesser des Randzylinders (24) hinaus radial nach außen erstreckt.

2. Gelenk nach Anspruch 1, **dadurch gekennzeichnet, dass** sich die Presssitzeinrichtung (32) ausgehend vom Randzylinder (24) der Innenhülse (6), insbesondere dem Außenumfang des Randzylinders (24), radial nach außen erstreckt und an der Außenhülse (5) anliegt.

3. Gelenk nach Anspruch 1 oder 2, **dadurch gekennzeichnet, dass** innerhalb der Außenhülse (5) ein Verschlussring (11) oder Verschlussdeckel (41) angeordnet ist, wobei die Presssitzeinrichtung (32) dem von dem Verschlussring (11) oder Verschlussdeckel (41) abgewandten Randzylinder (24) zugeordnet ist.

4. Gelenk nach einem der vorhergehenden Ansprüche, **dadurch gekennzeichnet, dass** die Presssitzeinrichtung (32) als eine radial nach außen vorstehende Kante, insbesondere des Randzylinders (24), ausgebildet ist.

5. Gelenk nach einem der vorhergehenden Ansprüche, **dadurch gekennzeichnet, dass** die Presssitzeinrichtung (32), insbesondere in einem zusammen gesetzten Zustand des Gelenks (1, 39) und in einem in Bezug zu einem Fahrwerkbauteil (35) unmontierten Zustand, einen Spalt (33) zwischen der Außenhülse (5) und dem der Presssitzeinrichtung (32) zugeordneten Randzylinder (24) bildet.

6. Gelenk nach einem der vorhergehenden Ansprüche, **dadurch gekennzeichnet, dass** die Presssitzeinrichtung (32) zum Realisieren einer Widerhakenfunktion und/oder zum Halten der Innenhülse (6) in der Außenhülse (5) vor der Montage des Gelenks (1, 39) in ein Fahrwerkbauteil (35) ausgebildet ist.

7. Gelenk nach einem der vorhergehenden Ansprüche, **dadurch gekennzeichnet, dass** die Innenhülse (6) im Bereich der Presssitzeinrichtung (32) und/oder des Randzylinders (24) mit der Presssitzeinrichtung (32) im Vergleich zum von der Presssitzeinrichtung (32) abgewandten Randzylinder (25) eine radial nach innen gerichtete Materialverdickung und/oder Materialverstärkung (12) aufweist.

8. Gelenk nach einem der vorhergehenden Ansprüche, **dadurch gekennzeichnet, dass** ein Verschlussring (11) oder Verschlussdeckel (41) und die Innenhülse (6) mit der integralen Presssitzeinrichtung (32) in die Außenhülse (5) eingepresst sind.

9. Gelenk nach einem der vorhergehenden Ansprüche, **gekennzeichnet durch** eine Ausbildung für ein Fahrwerkbauteil (35) zum Montieren an einem Fahrwerk eines Kraftfahrzeuges, insbesondere als ein Kugelzapfengelenk oder als ein Kugelhülsengelenk mit einem Kugelzapfen oder einer Kugelhülse als Gelenkinnenteil (8, 40) und einer Kugelschale als Gelenkschale (9).

10. Verfahren zum Herstellen eines Gelenkes (1, 39) gemäß einem der vorhergehenden Ansprüche, bei dem in eine Außenhülse (5) eine Innenhülse (6) eingebracht wird, bei dem eine Gelenkschale (7) in der Innenhülse (6) angeordnet wird, bei dem in der Gelenkschale (7) ein Gelenkinnenteil (8, 40) bewegbar gelagert wird, **dadurch gekennzeichnet, dass** eine innerhalb der Außenhülse (5) angeordnete Presssitzeinrichtung (32) als ein integraler Bestandteil der Innenhülse (6) in die Außenhülse (5) zum mindestens teilweisen radialen Aufweiten der Außenhülse (5) eingepresst wird.

11. Verfahren nach Anspruch 10, **dadurch gekennzeichnet, dass** die sich radial in Richtung der Außenhülse (5) erstreckende Presssitzeinrichtung (32) im Bereich eines Randzylinders (24) der Innenhülse (6) angeordnet ist, wobei im Bereich des Randzylinders (24) ausschließlich die Presssitzeinrichtung (32) beim Einpressen der Innenhülse (6) in die Außenhülse (5) in Kontakt mit einer Innenseite der Außenhülse (5) gebracht wird.

12. Verfahren nach Anspruch 10 oder 11, **dadurch gekennzeichnet, dass** zunächst die Innenhülse (6) mit der Presssitzeinrichtung (32) und darauf folgend ein Verschlussring (11) oder Verschlussdeckel (41) in die Außenhülse (5) eingepresst werden, wobei die Außenhülse (5) mittels des Verschlussringes (11) oder Verschlussdeckels (41) mindestens teilweise radial aufgeweitet wird.

13. Verfahren nach einem der Ansprüche 10 bis 12, **dadurch gekennzeichnet, dass** aufgrund des Einpressens der Innenhülse (6) und eines Verschlussringes (11) oder Verschlussdeckels(41) jeweils ein Spalt (31, 33) zwischen in axialer Richtung der Innenhülse (6) beabstandeter Randzylinder (24, 25) und der Außenhülse (5) gebildet wird.

14. Verfahren nach Anspruch 13, **dadurch gekennzeichnet, dass** nach dem Einpressen der Innenhülse, und insbesondere des Verschlussringes (11) oder Verschlussdeckels (41), die Außenhülse (5) in ein Lagerauge (34) eines Fahrwerkbauteiles (35) eingepresst wird, wodurch die Randzylinder (24, 25) der Innenhülse (6) an die Innenseite der Außenhülse (5) angelegt und/oder angepresst werden.

## Claims

1. Joint for a vehicle with an outer sleeve (5), a joint cup (7) for receiving a movably mounted joint inner part (8, 40), and an inner sleeve (6) which is arranged at least partially between the joint cup (7) and the outer sleeve (5), the inner sleeve (6) having two radially outwardly projecting edge cylinders (24, 25) which are spaced apart from one another axially and run around on the outer circumference of the inner sleeve (6), and the two edge cylinders (24, 25) define a circumferential depression (23) in the form of a groove on the outer circumference of the inner sleeve (6), **characterized in that** a press fit device (32) which is configured integrally with the inner sleeve (6) extends, in the region of at least one edge cylinder (24) of the inner sleeve (6), radially outwards beyond the external diameter of the edge cylinder (24)

2. Joint according to Claim 1, **characterized in that**, starting from the edge cylinder (24) of the inner sleeve (6), in particular from the outer circumference of the edge cylinder (24), the press fit device (32) extends radially outwards and bears against the outer sleeve (5).

3. Joint according to Claim 1 or 2, **characterized in that** a closure ring (11) or closure cover (41) is arranged within the outer sleeve (5), the press fit device (32) being assigned to the edge cylinder (24) which faces away from the closure ring (11) or closure cover (41).

4. Joint according to one of the preceding claims, **characterized in that** the press fit device (32) is configured as a radially outwardly projecting edge, in particular of the edge cylinder (24).

5. Joint according to one of the preceding claims, **characterized in that**, in particular in an assembled state of the joint (1, 39) and in a dismantled state in relation to a chassis component (35), the press fit device (32) forms a gap (33) between the outer sleeve (5) and the edge cylinder (24) which is assigned to the press fit device (32).

6. Joint according to one of the preceding claims, **characterized in that** the press fit device (32) is configured to realise a barb function and/or to hold the inner sleeve (6) in the outer sleeve (5) before the assembly of the joint (1, 39) into a chassis component (35) .

7. Joint according to one of the preceding claims, **characterized in that**, in the region of the press fit device (32) and/or the edge cylinder (24) with the press fit device (32), the inner sleeve (6) has a radially inwardly directed thickened material portion and/or material reinforcement (12) in comparison with the edge cylinder (25) which faces away from the press fit device (32) .

8. Joint according to one of the preceding claims, **characterized in that** a closure ring (11) or closure cover (41) and the inner sleeve (6) with the integral press fit device (32) are pressed into the outer sleeve (5) .

9. Joint according to one of the preceding claims, **characterized by** a configuration for a chassis component (35) for mounting on a chassis of a motor vehicle, in particular as a ball pivot joint or as a ball sleeve joint with a ball pivot or a ball sleeve as joint inner part (8, 40) and with a ball socket as joint cup (9).

10. Method for producing a joint (1, 39) according to one of the preceding claims, in the case of which method an inner sleeve (6) is introduced into an outer sleeve (5), in the case of which method a joint cup (7) is arranged in the inner sleeve (6), in the case of which method a joint inner part (8, 40) is mounted movably in the joint cup (7), **characterized in that** a press fit device (32) which is arranged within the outer sleeve (5) is pressed as an integral constituent part of the inner sleeve (6) into the outer sleeve (5) for at least partial radial widening of the outer sleeve (5).

11. Method according to Claim 10, **characterized in that** the press fit device (32) which extends radially in the direction of the outer sleeve (5) is arranged in the region of an edge cylinder (24) of the inner sleeve (6), exclusively the press fit device (32) being brought into contact with an inner side of the outer sleeve (5) in the region of the edge cylinder (24) during pressing of the inner sleeve (6) into the outer sleeve (5).

12. Method according to Claim 10 or 11, **characterized in that** first of all the inner sleeve (6) with the press fit device (32) and subsequently a closure ring (11) or closure cover (41) are pressed into the outer sleeve (5), the outer sleeve (5) being widened radially at least partially by means of the closure ring (11) or closure cover (41).

13. Method according to one of Claims 10 to 12, **characterized in that**, on account of the inner sleeve (6) and a closure ring (11) or closure cover (41) being pressed in, in each case one gap (31, 33) is formed between the outer sleeve (5) and edge cylinders (24, 25) which are spaced apart in the axial direction of the inner sleeve (6).

14. Method according to Claim 13, **characterized in that**, after the inner sleeve and, in particular, the closure ring (11) or closure cover (41) are pushed in, the outer sleeve (5) is pressed into a bearing socket (34) of a chassis component (35), as a result of which the edge cylinders (24, 25) of the inner sleeve (6) are placed and/or pressed onto the inner side of the outer sleeve (5) .

## Revendications

1. Articulation pour un véhicule comportant une douille extérieure (5), une cuvette d'articulation (7) destinée à recevoir une partie intérieure d'articulation (8, 40) montée mobile, une douille intérieure (6), qui est disposée au moins partiellement entre la cuvette d'articulation (7) et la douille extérieure (5), la douille intérieure (6) comprenant deux cylindres de bord (24, 25) espacés axialement l'un de l'autre, s'étendant au niveau de la périphérie extérieure de la douille intérieure (6) et faisant saillie radialement vers l'extérieur et les deux cylindres de bord (24, 25) définissant un évidement périphérique (23) sous la forme d'une rainure au niveau de la périphérie extérieure de la douille intérieure (6), **caractérisée en ce qu'**un dispositif d'ajustement serré (32) formé d'un seul tenant avec la douille intérieure (6) s'étend radialement vers l'extérieur au-delà du diamètre extérieur du cylindre de bord (24) dans la région d'au moins un cylindre de bord (24) de la douille intérieure (6).

2. Articulation selon la revendication 1, **caractérisée en ce que** le dispositif d'ajustement serré (32) s'étend radialement vers l'extérieur à partir du cylindre de bord (24) de la douille intérieure (6), en particulier de la périphérie extérieure du cylindre de bord (24), et s'applique contre la douille extérieure (5).

3. Articulation selon la revendication 1 ou 2, **caractérisée en ce qu'**une bague de fermeture (11) ou un couvercle de fermeture (41) est disposé(e) à l'intérieur de la douille extérieure (5), le dispositif d'ajustement serré (32) étant associé au cylindre de bord (24) opposé à la bague de fermeture (11) ou au couvercle de fermeture (41) .

4. Articulation selon l'une des revendications précédentes, **caractérisée en ce que** le dispositif d'ajustement serré (32) est formé comme une arête, faisant saillie radialement vers l'extérieur, en particulier du cylindre de bord (24).

5. Articulation selon l'une des revendications précédentes, **caractérisée en ce que** le dispositif d'ajustement serré (32) forme, en particulier dans un état assemblé de l'articulation (1, 39) et dans un état non monté par rapport à un composant de châssis (35), une fente (33) entre la douille extérieure (5) et le cylindre de bord (24) associé au dispositif d'ajustement serré (32) .

6. Articulation selon l'une des revendications précédentes, **caractérisée en ce que** le dispositif d'ajustement serré (32) est formé pour réaliser une fonction de crochet et/ou pour retenir la douille intérieure (6) dans la douille extérieure (5) avant le montage de l'articulation (1, 39) dans un composant de châssis (35).

7. Articulation selon l'une des revendications précédentes, **caractérisée en ce que** la douille intérieure (6) présente un épaississement de matériau et/ou un renforcement de matériau (12) orienté radialement vers l'intérieur dans la région du dispositif d'ajustement serré (32) et/ou du cylindre de bord (24) avec le dispositif d'ajustement serré (32) par comparaison avec le cylindre de bord (25) opposé au dispositif d'ajustement serré (32).

8. Articulation selon l'une des revendications précédentes, **caractérisée en ce qu'**une bague de fermeture (11) ou un couvercle de fermeture (41) et la douille intérieure (6) avec le dispositif d'ajustement serré (32) d'un seul tenant sont pressés dans la douille extérieure (5) .

9. Articulation selon l'une des revendications précédentes, **caractérisée par** une formation pour un composant de châssis (35) pour le montage sur un châssis d'un véhicule automobile, en particulier comme une articulation à tourillon sphérique ou comme une articulation à douille sphérique dotée d'un tourillon sphérique ou d'une douille sphérique comme partie intérieure d'articulation (8, 40) et d'une cuvette sphérique comme cuvette d'articulation (9).

10. Procédé permettant de fabriquer une articulation (1, 39) selon l'une des revendications précédentes, dans lequel une douille intérieure (6) est introduite dans une douille extérieure (5), dans lequel une cuvette d'articulation (7) est disposée dans la douille intérieure (6), dans lequel une partie intérieure d'articulation (8, 40) est montée mobile dans la cuvette d'articulation (7), **caractérisé en ce qu'**un dispositif d'ajustement serré (32) disposé à l'intérieur de la douille extérieure (5) est pressé en tant qu'élément constitutif d'un seul tenant de la douille intérieure (6) dans la douille extérieure (5) pour élargir la douille extérieure (5) au moins partiellement radialement.

11. Procédé selon la revendication 10, **caractérisé en ce que** le dispositif d'ajustement serré (32) s'étendant radialement dans la direction de la douille extérieure (5) est disposé dans la région d'un cylindre de bord (24) de la douille intérieure (6), seulement le dispositif d'ajustement serré (32) étant amené en contact avec un côté intérieur de la douille extérieure (5) dans la région du cylindre de bord (24) lors du pressage de la douille intérieure (6) dans la douille extérieure (5).

12. Procédé selon la revendication 10 ou 11, **caractérisé en ce que** tout d'abord la douille intérieure (6) avec le dispositif d'ajustement serré (32) et ensuite une bague de fermeture (11) ou un couvercle de fermeture (41) sont pressés dans la douille extérieure (5), la douille extérieure (5) étant élargie radialement au moins partiellement au moyen de la bague de fermeture (11) ou du couvercle de fermeture (41).

13. Procédé selon l'une des revendications 10 à 12, **caractérisé en ce qu'**en raison du pressage de la douille intérieure (6) et d'une bague de fermeture (11) ou d'un couvercle de fermeture (41), une fente (31, 33) est formée respectivement entre des cylindres de bord (24, 25) espacés dans la direction axiale de la douille intérieure (6) et la douille extérieure (5).

14. Procédé selon la revendication 13, **caractérisé en ce qu'**après le pressage de la douille intérieure, et en particulier de la bague de fermeture (11) ou du couvercle de fermeture (41), la douille extérieure (5) est pressée dans un œil de palier (34) d'un composant de châssis (35), de sorte que les cylindres de bord (24, 25) de la douille intérieure (6) soient appliqués et/ou pressés contre le côté intérieur de la douille extérieure (5).
